# EUROPÄISCHE PATENTANMELDUNG

(11) **EP 4 145 324 A1**
(43) Veröffentlichungstag der Anmeldung: **08.03.2023**
(21) Anmeldenummer: 21194616.5
(22) Anmeldetag: 02.09.2021
(51) Int. Cl.: G06F 21/64, G06Q 50/20

(54) **VERFAHREN UND SYSTEM ZUM GESICHERTEN VERARBEITEN VON ZERTIFIZIERUNGSANFRAGEN**

(71) Anmelder: Secjur GmbH, 93053 Regensburg (DE)
(72) Erfinder: Hanitsch, Niklas, 22587 Hamburg (DE); Meyer, Anna-Maria, 63741 Aschaffenburg (DE); Moritz, Sven, 60487 Frankfurt am Main (DE); Töllner, Nils, 20535 Hamburg (DE)
(74) Vertreter: Michalski Hüttermann & Partner Patentanwälte mbB

(57) **Zusammenfassung**

Bei einem Verfahren zum gesicherten Verarbeiten einer Zertifizierungsanfrage einer einen Zertifizierungsnachweis anfragenden ersten Einheit soll das Verfahren transparenter und fälschungssicherer gemacht werden. Dies wird dadurch erreicht, dass ein computerimplementiertes Verfahren angegeben wird, wobei die Verarbeitung der Zertifizierungsanfrage mittels einer Private-Permissioned Blockchain erfolgt. Auch betrifft die Erfindung ein Computersystem umfassend Mittel zum Ausführen des Verfahrens.

## Beschreibung

Die Erfindung betrifft das technische Gebiet der Blockchain-Technologie. Insbesondere betrifft die Erfindung das gesicherte Verarbeiten von Zertifizierungsanfrage mittels einer Private-Permissioned Blockchain.

Die Bandbreite möglicher Anwendungen der Blockchain-Technologie ist groß. In ihrer einfachsten Form kann eine Blockchain als ein verteiltes Hauptbuch betrachtet werden, das die relevanten Details für jede Transaktion enthält, die jemals verarbeitet wurde. Die Gültigkeit und Authentizität jeder Transaktion werden durch digitale Signaturen (Kryptografie) geschützt. Blockchains sind von Natur aus resistent gegen Änderungen der gespeicherten Daten. Funktional kann eine Blockchain als offenes, verteiltes Hauptbuch dienen, das Transaktionen zwischen zwei Parteien effizient und auf nachprüfbare und dauerhafte Weise aufzeichnen kann. Die Blockchain kann als Quelle für die Überprüfung von gemeldeten Transaktionen verwendet werden.

Die Entwicklung der Blockchain-Technologie und einige ihrer Besonderheiten wie Smart Contracts haben auch wichtige Auswirkungen beispielsweise auf das Umfeld von Prozessaudits. Ein Prozessaudit überprüft bestimmte Vorgänge und Arbeitsabläufe auf systematische Fehler. Dazu fährt ein Auditor normalerweise zum Klienten vor Ort. Je größer die fundierten Datenmengen des Unternehmens zu den Prozessen sind, desto einfacher ist es für den Auditor die Prozesse zu überprüfen. Ein Prozessaudit dient zur Bestätigung der direkten und indirekten Prozessparameter für die Lenkung der Prozessqualität und zur Verbesserung der Qualitätsfähigkeit des jeweiligen Verfahrens. Es dient auch zur Sicherstellung der geforderten Ausprägung der Qualitätsmerkmale des Prozesses und systematischen Verbesserung der Prozessüberwachung während der Fertigung. Bisher findet der Audit-Prozess manuell, d.h. über Interviews, Fragebögen und Vor-Ort Kontrollen statt. Mit dieser kann der Prozess an sich zwar ausgeführt werden, die Einsicht bzw. Überprüfung ist jedoch hier nur bedingt möglich. Datenschutzbeauftragte sind weisungsfrei und gewährleisten mit einer Reihe von Audits, Beratung und Überwachung bei einem Unternehmen den Schutz personenbezogener Daten. Im Rahmen dieser Überwachung entstehen Kommunikationsanforderungen zwischen dem Datenschutzbeauftragten und Stellen, intern, sowie extern, bei der Informationsermittlung und der genauen Erarbeitung von Handlungsempfehlungen. Diese Kommunikation findet ungerichtet über direkte Interviews, Email Softwaretools oder Telefon statt. Bei dieser Kommunikation werden sowohl unternehmensbezogene Daten, als auch Betroffenendaten ausgetauscht, obwohl die Kommunikation nicht zwangsläufig sicher ist. Zudem entstehen die abgeleiteten Maßnahmen nur aus den Empfehlungen und der manuellen Recherche des designierten Datenschutzbeauftragten. Es fehlt bei den bekannten Verfahren somit an einer erforderlichen Transparenz für Dritte. Außerdem sind die bekannten Verfahren nicht ausreichend fälschungssicher.

Vor diesem Hintergrund ist es eine Aufgabe der vorliegenden Erfindung, die aus dem Stand der Technik bekannten Verfahren transparenter und fälschungssicherer zu machen.

Diese Aufgabe wird durch technische Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem Aspekt wird die erfindungsgemäße Aufgabe durch ein Computerimplementiertes Verfahren zum gesicherten Verarbeiten einer Zertifizierungsanfrage einer einen Zertifizierungsnachweis anfragenden ersten Einheit gelöst, wobei die erste Einheit einer Gruppe von Einheiten zugeordnet ist, das Verfahren umfassend die folgenden Schritte:
- Bereitstellen eines Computersystems, wobei das Computersystem zumindest eine Private-Permissioned Blockchain umfasst, wobei die Private-Permissioned Blockchain zumindest eine Main-Chain und eine Side-Chain umfasst, wobei auf die Private-Permissioned Blockchain alle Einheiten der Gruppe von Einheiten Zugriff haben, wobei in der Private-Permissioned Blockchain zumindest eine Transaktionsregel und eine Zertifizierungsregel gespeichert ist, wobei die Zertifizierungsregel zur Verarbeitung einer Zertifizierungsanfrage einer Transaktion konfiguriert ist,
- Zuteilen einer Berechtigung an die erste Einheit, wobei die Berechtigung den Zugriff auf die Private-Permissioned Blockchain regelt,
- Übersenden von zumindest einer Transaktion der ersten Einheit mit einer Zertifizierungsanfrage für die Transaktion an die Private-Permissioned Blockchain,
- Empfangen der zumindest einen Transaktion der ersten Einheit durch die Private-Permissioned Blockchain,
- Durchführung einer Prüfung der Zertifizierungsanfrage mittels der Zertifizierungsregel der in der Private-Permissioned Blockchain gesicherten Transaktionsregel und speichern eines Transaktionsartefakts in der Side-Chain,
wobei im Falle einer erfolgreichen Prüfung:
- Weiterleitung der Zertifizierungsanfrage an eine Zertifizierungsinstanz,
- Ausstellen des Zertifizierungsnachweis durch die Zertifizierungsinstanz wobei der Zertifizierungsnachweis ein digitales Zertifikat umfasst,
- Bereitstellen des Zertifizierungsnachweises der ersten Einheit
wobei im Falle einer nicht erfolgreichen Prüfung:
- Weiterleitung der Zertifizierungsanfrage an die Zertifizierungsinstanz wobei kein Zertifizierungsnachweis ausgestellt wird oder bei einem bereits vorhandenen Zertifizierungsnachweis der ersten Einheit ein Widerruf des Zertifizierungsnachweises der ersten Einheit durch die Zertifizierungsinstanz ausgestellt wird.

Eine Blockchain ist eine kontinuierlich erweiterbare Liste von Datensätzen in einzelnen Blöcken. Neue Blöcke werden nach einem Konsensverfahren erstellt und mittels kryptographischer Verfahren an eine bestehende Kette angehängt. Jeder Block enthält dabei typischerweise einen kryptographisch sicheren Hash des vorhergehenden Blocks, einen Zeitstempel und Transaktionsdaten. Eine Blockchain ist eine verkettete Folge von Datenblöcken, die über die Zeit weiter fortgeschrieben wird. Eine Permissioned Blockchain ist eine Form von Blockchain, bei der nur ausgewählte Teilnehmer Zugriffsrechte haben. Die Private Blockchain ist nicht öffentlich einsehbar, sondern kann nur von autorisierten Personen angesehen und überprüft werden. Sie gilt durch den stark reglementierten Zugriff als sicherer und wird daher bevorzugt in Unternehmen zur Verwaltung interner Transaktionen eingesetzt. Eine Side-Chain ist eine Blockchain, die von einer übergeordneten Blockchain abgespalten wurde und seither in gewissen Grenzen eigenständig arbeiten kann. Sie ist jedoch weiterhin mit ihrer ursprünglichen Blockchain verbunden, sodass z. B. Assets zwischen beiden Blockketten ausgetauscht werden können. Eine Blockchain kann mehrere Side-Chains zugleich besitzen. Eine Side-Chain oder Seitenkette ist eine Abzweigung von einer übergeordneten Blockchain (Main-Chain bzw. Hauptkette), die aber weiterhin lose mit ihrer Main-Chain in Verbindung steht. Diese Verbindung erlaubt Transaktionen zwischen Main-Chain und Side-Chain, z. B. das Übertragen von Token von der Seitenkette zur Hauptkette und umgekehrt. Durch kryptographische Verfahren wird sichergestellt, dass die Blockchain nicht nachträglich geändert werden kann. Die Kette der Blöcke ist somit unveränderbar, fälschungs- und manipulationssicher.

Die auf der Blockchain gespeicherten Daten sind von allen Beteiligten einsehbar. Sie sind deshalb aber nicht unbedingt auch für alle sinnvoll lesbar, denn Inhalte können verschlüsselt abgespeichert werden. Blockchains erlauben so eine flexible Ausgestaltung des Vertraulichkeitsgrads. Durch die Nutzung digitaler Signaturen sind Informationen in der Blockchain speicherbar, die fälschungssicher nachweisen, dass Teilnehmer unbestreitbar bestimmte Daten hinterlegt haben, etwa Transaktionen angestoßen haben. Mittels der gesicherten Verarbeitung einer Zertifizierungsanfrage, wird die Sicherheit und Fälschungssicherheit von Transaktionen zwischen zwei Parteien zu erhöht.

In einer technisch vorteilhaften Ausführungsform des Verfahrens umfasst das Verfahren die weiteren folgenden Schritte:
- Zuteilung eines Zertifizierungstoken an eine zweite Einheit außerhalb der Gruppe von Einheiten, wobei der Zertifizierungstoken die zweite Einheit dazu berechtigt nach einer festgelegten Abstufung Transaktionen auf der Private-Permissioned Blockchain einzusehen, wobei die Zuteilung durch die erste Einheit erfolgt. Beispielsweise können festgelegte Abstufungen zur Einsicht von Transaktionen auf der Private-Permissioned Blockchain die Einsicht auf die Erfüllung oder Nichterfüllung von bestimmten Teilen der Transaktionsregeln und den dazugehörigen Transaktionsartefakten sein. Beispielsweise könnte eine Firma, für welche die Cloud-Security ihrer Dienstleister eine besonders hohe Priorität hat, nur die diesbezüglichen Transaktionen und Artefakte ihrer Dienstleister einsehen. Vorteilhaft hierbei ist, dass die anfragende Firma für sie irrelevante Informationen nicht einsehen muss, was auf dieser Seite zu einer Zeitersparnis führt. Für die andere Firma erhöht sich dadurch durch die Nichtoffenlegung der bestimmten Daten die Sicherheit, da das "need to know" Prinzip gewahrt wird. Weiter vorteilhaft hierbei ist, dass hier nur der relevante Teil der Transaktionsartefakte an die zweite Einheit offengelegt werden muss. Anders als durch herkömmliche Verfahren, bei denen regelmäßig vollständige Auditberichte bereitgestellt werden, behält die zertifizierungsanfragende Einheit selbst die Autonomie über die Preisgabe von Transaktionsartefakten, die regelmäßig sensible Geschäftsgeheimnisse darstellen.

In einer technisch vorteilhaften Ausführungsform des Verfahrens umfasst der Schritt des Ausstellens des Zertifizierungsnachweises der ersten Einheit durch die Zertifizierungsinstanz den folgenden zusätzlichen Schritt:
- Bereitstellen einer Zertifikatsstatusinformation über den Zertifizierungsnachweis der ersten Einheit.

Die Zertifikatsstatusinformation kann beispielsweise sein, dass eine Einheit nach den hinterlegten Transaktionsregeln die rechtlichen Verpflichtungen aus einem bestimmten, für diese Einheit bindenden, Gesetz einhält, welche in den Transaktionsregeln widergespiegelt werden. Vorteile davon können sein, dass die entsprechende Einheit hiermit ein Indiz für ihre Regelkonformität erbringen kann. Dies fördert externes Vertrauen in die Rechtschaffenheit und Prozesstreue der entsprechenden Einheit. Zudem kann der Nachweis, der in der Zertifizierung eines Transaktionsartefaktes liegt, in einigen Fällen selbst zur Erfüllung einer Rechtspflicht erforderlich sein. Daher liefert das Verfahren außerdem eine technische Lösung für die zertifizierungsanfragende Einheit, um diese erbringen zu können.

In einer technisch vorteilhaften Ausführungsform des Verfahrens umfasst im Falle einer nicht erfolgreichen Prüfung: das Verfahren den folgenden zusätzlichen Schritt:
- Bereitstellen einer Zertifikatswiderrufsinformation über den Zertifizierungsnachweis der ersten Einheit.

In einer technisch vorteilhaften Ausführungsform des Verfahrens wird der Zertifizierungsnachweis durch die Zertifizierungsinstanz mittels eines Smart Contracts ausgestellt. Ein Vorteil von Smart Contracts besteht darin, dass die Ausstellung eines Zertifikats automatisiert erfolgt, wenn bestimmte Anforderungen erfüllt sind.

In einer technisch vorteilhaften Ausführungsform des Verfahrens erfolgt die Durchführung der Prüfung der Zertifizierungsanfrage und das Ausstellen des Zertifizierungsnachweises in Echtzeit.

In einer technisch vorteilhaften Ausführungsform des Verfahrens erfolgt die Verarbeitung der Transaktionen sowie das Erstellen der Transaktionsregeln mittels eines Webcrawlers und/oder Künstlicher Intelligenz und/oder linguistischer Datenverarbeitung.

In einer technisch vorteilhaften Ausführungsform des Verfahrens umfassen die Schritte des Übersendens von zumindest einer Transaktion der ersten Einheit mit einer Zertifizierungsanfrage für die Transaktion an die Private-Permissioned Blockchain und des Empfangens der zumindest einen Transaktion der ersten Einheit durch die Private-Permissioned Blockchain die folgenden Schritte:
- Bereitstellen eines cloudbasierten Kommunikationsnetzwerks für den Austausch von Transaktionen zwischen der ersten Einheit, einer dritten Einheit und eines Evaluationssystems, wobei das Evaluationssystem zum automatisierten Auswerten von Transaktion eingerichtet ist, wobei das cloudbasierte Kommunikationsnetzwerk mit der Private-Permissioned Blockchain verbunden ist,
- Empfangen der zumindest einen Transaktion der ersten Einheit mittels des cloudbasierten Kommunikationsnetzwerks,
- Prüfen einer ersten individuellen Transaktion der Transaktion der ersten Einheit und Erzeugen einer Empfehlungstransaktion mittels des Evaluationssystem, wobei das Erzeugen der Empfehlungstransaktion in dem Evaluationssystem mittels einer Künstliche Intelligenz erfolgt,
- Erzeugen einer zweiten individuellen Transaktion durch die dritte Einheit auf Basis der Transaktion der ersten Einheit,
- Ausführen einer Aktualisierung der auf der Private-Permissioned Blockchain gespeicherten Transaktionen, wobei die Aktualisierung der Transaktionen bei einer Änderung der Transaktion der ersten Einheit, bei einer Änderung der Empfehlungstransaktion des Evaluationssystem, und/oder bei einer Änderung der individuellen Transaktionen der dritten Einheit ausgeführt wird, wobei die Aktualisierung der gespeicherten Transaktionen durch Anlegen einer Transaktion auf der Main-Chain der Private-Permissioned Blockchain erfolgt, wobei die angelegte Transaktion die Änderung umfasst.

Ein cloudbasierte Kommunikationsnetzwerk hat den Vorteil, dass Informationen auf einfache Weise zwischen verschiedenen Einheiten ausgetauscht werden können.

In einer technisch vorteilhaften Ausführungsform des Verfahrens umfasst das Verfahren die folgenden zusätzlichen Schritte:
- Anfragen eines Zertifikatsstatus der ersten Einheit durch die zweite Einheit,
- Genehmigung der Anfrage eines Zertifikatsstatus der ersten Einheit durch die erste Einheit,
- Bestätigung einer Einsichtnahme des in der Side-Chain gespeicherten Transaktionsartefakts durch die zweite Einheit,
- Bestätigung der korrekten Durchführung der Transaktion zur Zertifikatserhaltung durch die zweiten Einheit,
- Erhöhung eines Trust-Levels des Zertifizierungstokens um den Wert von jeweils 1, wobei die Erhöhung mittels eines Smart Contracts getriggert wird.

Mittels Trust Levels wird das Vertrauen in die erste Einheit bewertet und in Vertrauensstufen ausgedrückt. Es gibt verschiedene Vertrauensstufen die zur Bewertung der ersten Einheit und dessen Vertrauenswürdigkeit benutzt werden können. Diese können insbesondere ein Kriterium für die Sicherheit sein.

In einer technisch vorteilhaften Ausführungsform des Verfahrens erfolgt die Anfragen des Zertifikatsstatus der ersten Einheit durch die zweite Einheit über das cloudbasierte Kommunikationsnetzwerk.

Gemäß einem weiteren Aspekt wird die erfindungsgemäße Aufgabe durch ein Computersystem zum gesicherten Verarbeiten einer Zertifizierungsanfrage einer einen Zertifizierungsnachweis anfragenden ersten Einheit gelöst, umfassend Mittel zum Ausführung des zuvor beschriebenen Verfahrens.

In einer technisch vorteilhaften Ausführungsform des Systems umfasst das System ein cloudbasiertes Kommunikationsnetzwerk, wobei das cloudbasierte Kommunikationsnetzwerk für den Austausch von Transaktionen zwischen der ersten Einheit, einer dritten Einheit und eines Evaluationssystems eingerichtet ist.

In einer technisch vorteilhaften Ausführungsform des Systems ist das Evaluationssystem derart eingerichtet, eine Empfehlungstransaktion einer ersten individuellen Transaktion der Transaktion der ersten Einheit zu erzeugen, wobei das Erzeugen der Empfehlungstransaktion in dem Evaluationssystem mittels einer Künstliche Intelligenz erfolgt.

Ausführungsbeispiele der Erfindung sind in den Zeichnungen dargestellt und werden im Folgenden näher beschrieben. Es zeigen:
- Fig. 1: ein Blockdiagramm, das ein Verfahren zum gesicherten Verarbeiten einer Zertifizierungsanfrage gemäß einem Ausführungsbeispiel der Erfindung darstellt,
- Fig. 2: ein Blockdiagramm, das einen Teilabschnitt eines Verfahrens zum gesicherten Verarbeiten einer Zertifizierungsanfrage gemäß einem weiteren Ausführungsbeispiel der Erfindung darstellt.

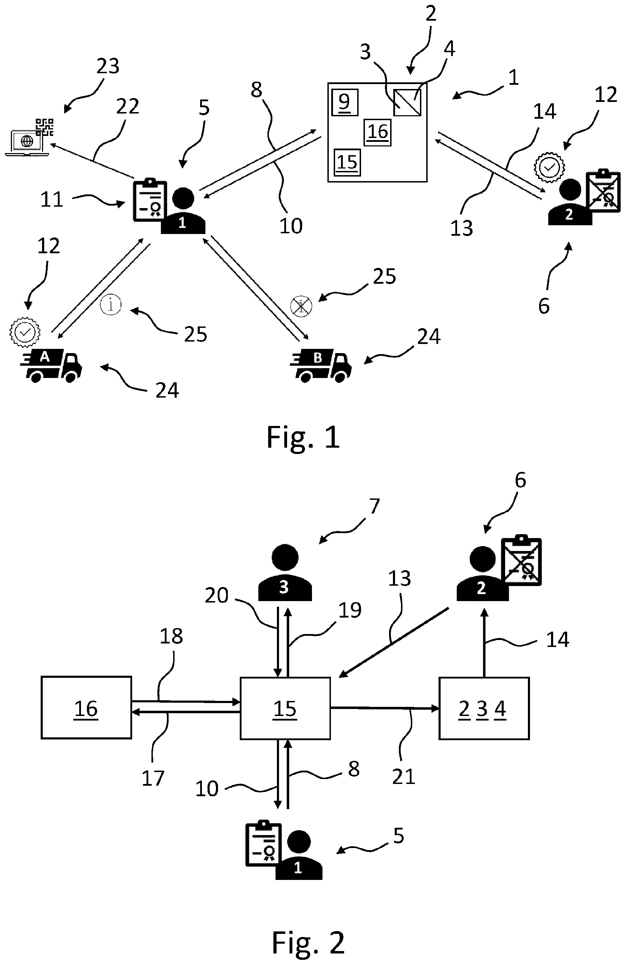

In Fig. 1 ist ein Blockdiagramm eines Verfahrens zum gesicherten Verarbeiten einer Zertifizierungsanfrage gemäß einem Ausführungsbeispiel der Erfindung gezeigt. Eine erste Einheit 5 stellt eine Zertifizierungsanfrage für einen Zertifizierungsnachweis. Die erste Einheit 5 kann dabei einer Gruppe von Einheiten zugeordnet sein. Das Verfahren wird mittels eines Computersystems 1 durchgeführt, wobei das Computersystem 1 zumindest eine Private-Permissioned Blockchain 2 umfasst. Die Private-Permissioned Blockchain 2 umfasst zumindest eine Main-Chain 3 und eine Side-Chain 4. Auf die Private-Permissioned Blockchain 2 haben alle Einheiten der Gruppe von Einheiten Zugriff. In der Private-Permissioned Blockchain 2 ist zumindest eine Transaktionsregel und eine Zertifizierungsregel gespeichert, wobei die Zertifizierungsregel zur Verarbeitung einer Zertifizierungsanfrage einer Transaktion konfiguriert ist. Im nächsten Schritt des Verfahrens wird eine Berechtigung an die erste Einheit 5 zugeteilt, wobei die Berechtigung den Zugriff auf die Private-Permissioned Blockchain 2 regelt. Hierdurch wird sichergestellt, dass nur berechtigte Einheiten Zugriff auf die Blockchain 2 haben. Die erste Einheit 5 übersendet anschließend zumindest eine Transaktion mit einer Zertifizierungsanfrage 8 für die Transaktion an das Computersystem 1, wobei die Transaktion der ersten Einheit 5 mittels des Computersystems 1 empfangen wird. In einem weiteren Schritt wird eine Prüfung der Zertifizierungsanfrage 8 mittels der Zertifizierungsregel der in der Private-Permissioned Blockchain 2 gesicherten Transaktionsregel durchgeführt und ein Transaktionsartefakt in der Side-Chain 4 gespeichert. Ist die Prüfung erfolgreich wird die Zertifizierungsanfrage 8 an eine Zertifizierungsinstanz 9 weitergeleitet, die Zertifizierungsinstanz 9 stellt einen Zertifizierungsnachweis 11 aus, wobei der Zertifizierungsnachweis 11 ein digitales Zertifikat umfasst. Solch ein Zertifizierungsnachweis 11 durch die Zertifizierungsinstanz 9 kann beispielsweise mittels eines Smart Contracts ausgestellt werden. Der Zertifizierungsnachweis 11 wird anschließend der ersten Einheit 5 bereitgestellt 10. Zusätzlich kann eine Zertifikatsstatusinformation 23 über den Zertifizierungsnachweis 11 der ersten Einheit 5 bereitgestellt werden. Diese Zertifikatsstatusinformation kann beispielsweise ein Widget sein, dass auf einer Webseite den Status über den Zertifizierungsnachweis 11 anzeigt. Ist die Prüfung der Zertifizierungsanfrage mittels der Zertifizierungsregel der in der Private-Permissioned Blockchain 2 gesicherten Transaktionsregel nicht erfolgreich, wird die Zertifizierungsanfrage an die Zertifizierungsinstanz 9 weitergeleitet, wobei kein Zertifizierungsnachweis 11 ausgestellt wird. Ist ein Zertifizierungsnachweis 11 der ersten Einheit 5 bereits vorhanden, wird ein Widerruf des Zertifizierungsnachweises 11 der ersten Einheit 5 durch die Zertifizierungsinstanz 9 ausgestellt. Gleichzeit kann beispielsweise auch eine Zertifikatswiderrufsinformation über den Zertifizierungsnachweis 11 der ersten Einheit 5 bereitgestellt werden.

In einem Ausführungsbeispiel kann es vorgesehen sein, dass die erste Einheit 5 einen Zertifizierungstoken 12 an eine zweite Einheit 6 außerhalb der Gruppe von Einheiten zuteilt. Der Zertifizierungstoken 12 berechtigt die zweite Einheit 6 dazu, nach einer festgelegten Abstufung Transaktionen auf der Private-Permissioned Blockchain 2 einzusehen. Beispielsweise können festgelegte Abstufungen zur Einsicht von Transaktionen auf der Private-Permissioned Blockchain 2 die Einsicht auf die Erfüllung oder Nichterfüllung von bestimmten Teilen der Transaktionsregeln und den dazugehörigen Transaktionsartefakten sein. Zum Beispiel könnte eine Firma, für welche die Cloud-Security ihrer Dienstleister eine besonders hohe Priorität hat, nur die diesbezüglichen Transaktionen und Artefakte ihrer Dienstleister einsehen. Vorteilhaft ist, dass die anfragende Firma für sie irrelevante Informationen nicht einsehen muss, was auf dieser Seite zu einer Zeitersparnis führt. Für die andere Firma erhöht sich dadurch durch die Nichtoffenlegung der bestimmten Daten die Sicherheit, da das "need to know" Prinzip gewahrt wird.

In einem weiteren Ausführungsbeispiel der Erfindung umfasst das Verfahren die folgenden zusätzlichen Schritte:
- Anfragen eines Zertifikatsstatus der ersten Einheit 5 durch die zweite Einheit 6,
- Genehmigung der Anfrage eines Zertifikatsstatus der ersten Einheit 5 durch die erste Einheit 5,
- Bestätigung einer Einsichtnahme des in der Side-Chain 4 gespeicherten Transaktionsartefakts durch die zweite Einheit 6,
- Bestätigung der korrekten Durchführung der Transaktion zur Zertifikatserhaltung durch die zweiten Einheit 6,
- Erhöhung eines Trust-Levels des Zertifizierungstokens 12 um den Wert von jeweils 1, wobei die Erhöhung mittels eines Smart Contracts getriggert wird.

In einem Ausführungsbeispiel der Erfindung kann das Verfahren beispielsweise in einem Auditprozess genutzt werden. Die erste Einheit 5 ist beispielsweise ein Klient. Der Ausgangspunkt ist eine Private-Permissioned Blockchain 2, auf die alle Klienten Zugriff haben. Den Klienten können automatisiert als Folge verschiedener Handlungen (bspw. vertragsbasiert) verschiedene Rechte zugeteilt werden, sodass sie nicht, wie in einer traditionellen Blockchain, auf alle Daten zugreifen können, sondern nur auf diejenigen, die für sie wichtig sind und die sie einsehen dürfen. Dadurch kann verhindert werden, dass Klient A 5 die Daten von Klient B 6 einsehen oder sogar abgreifen kann. Die einzelnen Klienten 5 können zu ihrem Netzwerk jedoch ihre Partner 24, wie beispielsweise Lieferanten, hinzufügen. Diesen können dann auch Rechte zugeteilt werden, dass sie beispielsweise die Daten innerhalb des eigenen Netzwerkes einsehen können.

In einem Ausführungsbeispiel der Erfindung funktioniert der Blockchain basierte Auditprozess folgendermaßen: Klient 1 5 übergibt eine Transaktion mit der Absicht diese prüfen zu lassen mit einer Zertifizierungsanfrage 8 an das Computersystem 1. Transaktionen können beispielsweise einen Auditprozess betreffende Daten sein. Die Blockchain prüft dann die Daten, woraufhin drei Fälle eintreten können:
1. Die Prüfung ist erfolgreich und ein Smart Contract erstellt automatisch einen Zertifizierungsnachweises 11, der beispielsweise ein digitales Zertifikat sein kann, welches dem Klienten 5 sofort zugeteilt wird. Zudem kann der Klient 5 nach Erteilung des Zertifizierungsnachweises 11 auch ein Widget 23 auf seiner Website anzeigen lassen, welches die erfolgreiche Prüfung bestätigt. Dies kann beispielsweise auch, vernetzt über die Blockchain, automatisch durch einen Smart Contract erfolgen.
2. Der Klient 5 hat zuvor einen Zertifizierungsnachweis erhalten, hat jedoch die nächste Prüfung nicht bestanden, weshalb ihm automatisch, mit Hilfe beispielsweise eines Smart Contracts der Zertifizierungsnachweis entzogen wird. Zudem wird dadurch auch das Widget von der Website automatisch entfernt, da die Basis dafür der Zertifizierungsnachweis ist.
3. Der Klient 5 hatte zuvor noch keinen Zertifizierungsnachweis 11, erhält aber auch keine.

In einem Ausführungsbeispiel der Erfindung kann es weiter vorgesehen sein, dass Verantwortliche Stellen die Möglichkeit haben auf die Prozessdaten zur Prüfung einer Neu-Zertifizierung oder zur Kontrolle zu zugreifen. Dies kann beispielsweise durch Zuteilung eines Zertifizierungstoken 12 an die verantwortliche Stelle realisiert werden. Eine Zahlung für die Prüfung kann beispielsweise über einen Smart Contract oder einen Smart Invoice in Echtzeit nach Erteilung des Zertifizierungsnachweises erfolgen. Durch diesen Prozess wird sowohl die Sicherheit als auch Transparenz geschaffen. Da alle Beteiligten ein berechtigtes Interesse an dem Ergebnis der Prüfung eines Unternehmens haben, kann sichergestellt werden, dass der Zertifizierungsnachweises 11, zu dem Zeitpunkt, zu dem die Informationen abgerufen werden, vorliegt oder nicht. Sofern der Zertifizierungsnachweis 11 nicht vorliegt, können die Schritte, die zur Erteilung des Zertifizierungsnachweises 11, fehlen, eingesehen werden. Dank der Fälschungssicherheit der Blockchain, kann sichergestellt werden, dass das Unternehmen keine alten Informationen bzw. den Inhalt der Prüfung abändern können und somit zu jeder Zeit die richtigen Daten abrufen.

In Fig. 2 ist ein Blockdiagramm gezeigt, das einen Teilabschnitt eines Verfahrens zum gesicherten Verarbeiten einer Zertifizierungsanfrage gemäß einem weiteren Ausführungsbeispiel der Erfindung darstellt. Der in Fig. 2 gezeigte Teilabschnitt des Verfahrens zeigt ein Ausführungsbeispiel für die Schritte des Übersendens von zumindest einer Transaktion 8 der ersten Einheit 5 mit einer Zertifizierungsanfrage für die Transaktion an das Computersystem 1 und des Empfangens der zumindest einen Transaktion der ersten Einheit 5 mittels des Computersystems 1. Das Computersystem 1 umfasst in diesem Ausführungsbeispiel ein cloudbasiertes Kommunikationsnetzwerk 15. Das cloudbasierte Kommunikationsnetzwerk ist für den Austausch von Transaktionen zwischen der ersten Einheit 5, einer dritten Einheit 7 und eines Evaluationssystems 16 eingerichtet. Das Evaluationssystem 16 ist dabei zum automatisierten Auswerten von Transaktion eingerichtet. Das cloudbasierte Kommunikationsnetzwerk 15 ist mit der Private-Permissioned Blockchain 2 verbunden. Mittels des cloudbasierten Kommunikationsnetzwerks 15 wird eine Transaktion der ersten Einheit 5 zusammen mit einer Zertifizierungsanfrage 8 empfangen. Das Computersystem 1 prüft anschließend eine erste individuelle Transaktion der Transaktion 8 der ersten Einheit 5 und erzeugt eine Empfehlungstransaktion 18 mittels des Evaluationssystem 16. Die Empfehlungstransaktion 18 wird in dem Evaluationssystem 18 mittels einer Künstliche Intelligenz erzeugt. In einem weiteren Schritt kann es vorgesehen sein, dass eine zweite individuelle Transaktion durch die dritte Einheit 7 auf Basis der Transaktion der ersten Einheit 5 erfolgt. Anschließend werden die Transaktionen auf der Private-Permissioned Blockchain 2 aktualisiert, wobei die Aktualisierung der Informationen bei einer Änderung der Transaktion der ersten Einheit 5, bei einer Änderung der Empfehlungstransaktion 18 des Evaluationssystem 16, sowie bei einer Änderung der individuellen Transaktion 20 der dritten Einheit 7 ausgeführt wird. Hierbei erfolgt die Aktualisierung der Transaktionen auf der Blockchain durch Anlegen einer Transaktion auf der Main-Chain 3 der Private-Permissioned Blockchain 2 wobei die angelegte Transaktion die Änderung umfasst. Das Evaluationssystem 16 verarbeitet die Eingaben des Klienten 5 und erzeugt daraus juristische Handlungsempfehlungen, die hier im Bereich der Blockchain-Technologie Empfehlungstransaktion 18 sind. Dieser Prozess wird regelmäßig durch neue Sachverhalte trainiert und ergibt dadurch immer speziellere und umfassendere Anweisungen für den Berater. Dieser muss diese dann nur noch prüfen. Somit wird die Präzision der Empfehlungen mit jedem neuen Sachverhalt besser und genauer. Hierzu verarbeitet die künstliche Intelligenz nicht nur die Eingaben des Klienten, sondern weitere Trainingsdaten, Verordnungen, Gesetzestexte usw. In einem Ausführungsbeispiel der Erfindung ist das Evaluationssystem 16 ebenfalls cloudbasiert ausgeführt. Beispielsweise kann das Evaluationssystem 16 als eigene Plattform neben des cloudbasierten Kommunikationsnetzwerks in der Cloud ausgeführt sein.

In einem Ausführungsbeispiel der Erfindung kann beispielsweise die erste Einheit 5 ein Klient sein und die dritte Einheit 7 kann beispielsweise ein Compliance Berater sein. Das cloudbasierte Kommunikationsnetzwerk 15 kann dabei eine Compliance Plattform sein, die für die Kommunikation zwischen Klient 5 und Berater 7 vorgesehen ist. Ein Klient 5 und ein Compliance Berater 7 führen beispielsweise ein Audit durch. Dabei kann es sein, dass eine zweite Einheit 7, mit berechtigtem Interesse einen Anspruch durchzusetzen, die Ergebnisse dieses Audits erfahren möchte. Die Speicherung der Auditergebnisse darf hierbei nicht kompromittiert werden. Die zweite Einheit 7 muss jedoch der Zugang auf den Auditstatus zu jederzeit (in Echtzeit) möglich sein, wobei der Status zunächst verschlüsselt ist und nur auf Verlangen ein Zugriff gewährt wird. Mittels eines Evaluationssystem 16 werden automatisierte Empfehlungstransaktion 18 für den Klienten erzeugt. Dies geschieht, indem die Transaktionen des Klienten 5 in dem Sinne verarbeitet werden, dass das Evaluationssystem 16 zu diesen Transaktionen automatisch juristisch fundierte Empfehlungstransaktion 16 erzeugt und selbstständig aus den Transaktionen des Beraters 7, den Transaktionen des Klienten 5, sowie weiteren Publikationen und Quellen lernt, diese Empfehlungstransaktion zu erzeugen. Bislang beruht die Erzeugung von Handlungsempfehlungen bzw. Empfehlungstransaktion 18 auf der jeweiligen juristischen Expertise eines Beraters 7 und bedarf manueller Recherche. Jedwede Änderung, die Klient 5 und Berater 7 am Compliance Status vornehmen, wird auf der Private-Permissioned Blockchain 2, gespeichert. Indem der Status dort verschlüsselt gespeichert wird, können dritte zunächst die nicht Kompromittierung der gesamten Blockchain 2 bestätigen. Auf Verlangen hin, wird einer dritten Einheit 6 Zugriff auf den konkreten Status in Echtzeit gewährt, wobei die Private-Permissioned Blockchain 2, sämtliche Statusübergange und Änderungen 21 des Klienten enthält. Somit hat ein berechtigter Dritter 6 über das cloudbasierte Kommunikationsnetzwerk 15 als eine neutrale Zugriffsstelle die Möglichkeit, den Compliance Status des Klienten 5 zu erfahren.

Die Compliance Plattform nutz das Mittel der künstlichen Intelligenz, beispielsweise neuronale Netzwerke oder NLP (Natural Language Processing) in dem angegliederten Evaluationssystem 16. Hierbei werden aus den technisch aufgenommenen Informationen, juristische, technische und fachliche Empfehlungstransaktion 18 generiert. Hierduch wird sichergestellt, das die Informationen auch vollständig sind. In einem Ausführungsbeispiel können auf der Compliance Plattform verschiedene Elemente vorgesehen sein, die dabei helfen. Über digitalisierte Auditbögen werden die Informationen vom Klient 5 angepasst, beispielsweise nach seiner Branche und weiterer Unternehmensinformationen aufgenommen und einem Mandatsbearbeiter zur Verfügung gestellt. Über die Compliance Plattform durchlaufen Klient 5 und Berater 7 definierte Auditprozesse und haben die Möglichkeit weitere Zusatzinformationen und Unterlagen auszutauschen. Innerhalb der Compliance Plattform verarbeitet das Evaluationssystem 16 zunächst alle vorhandenen Informationen in Textform. Anschliessend werden diese Informationen mit bereits zuvor generierten Empfehlungstransaktion 18 abgeglichen und entschieden, welche konkreten Massnahmen für den Klienten 5 relevant sind. Das Evaluationssystem 16 verarbeitet kontinuierlich die Daten der Klienten und lernt aus bereits getroffenen Empfehlungstransaktion 18 oder versieht Empfehlungen aus der Fachliteratur oder weitere angeschlossener Quellen. Dem Mandatsbearbeiter wird zudem die Sicherheit der ausgewählten Handlungsempfehlung angezeigt. Die Compliance Plattform und das Evaluationssystem 15 lernen selbstständig aus den Informationen aller Klienten und Berater um eine vollständige Informationsbasis für eine Empfehlungstransaktion 18 zu sammeln, auszuwerten und bereitzustellen.

Alle in Verbindung mit einzelnen Ausführungsformen der Erfindung erläuterten Merkmale können in unterschiedler Kombination in dem erfindungsgemäßen Gegenstand vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmalen nicht beschränkt.

**Bezugszeichenliste**

| | |
|---|---|
| Computersystem | 1 |
| Private-Permissioned Blockchain | 2 |
| Main-Chain | 3 |
| Side-Chain | 4 |
| erste Einheit | 5 |
| zweite Einheit | 6 |
| dritte Einheit | 7 |
| Übermittlung von Transaktion mit Zertifizierungsanfrage | 8 |
| Zertifizierungsinstanz | 9 |
| Bereitstellen Zertifizierungsnachweis | 10 |
| Zertifizierungsnachweis | 11 |
| Zuteilung Zertifizierungstoken | 12 |
| Anfrage Zertifikatsstatus, Bestätigung der korrekten Durchführung | 13 |
| Berechtigung | 14 |
| cloudbasiertes Kommunikationsnetzwerk | 15 |
| Evaluationssystem | 16 |
| Transaktion an Evaluationssystem | 17 |
| Empfehlungstransaktion | 18 |
| Transaktion und Empfehlungstransaktion an dritte Einheit | 19 |
| individuelle Transaktion von dritter Einheit | 20 |
| Aktualisierung an Private-Permissioned Blockchain | 21 |
| Bereitstellen einer Zertifikatsstatusinformation | 22 |
| Zertifikatsstatusinformation | 23 |
| Partner | 24 |
| Informationsübermittlung | 25 |

## Patentansprüche

1. Computerimplementiertes Verfahren zum gesicherten Verarbeiten einer Zertifizierungsanfrage einer einen Zertifizierungsnachweis (11) anfragenden ersten Einheit (5), wobei die erste Einheit (5) einer Gruppe von Einheiten zugeordnet ist, das Verfahren umfassend die folgenden Schritte:
- Bereitstellen eines Computersystems (1), wobei das Computersystem (1) zumindest eine Private-Permissioned Blockchain (2) umfasst, wobei die Private-Permissioned Blockchain (2) zumindest eine Main-Chain (3) und eine Side-Chain (4) umfasst, wobei auf die Private-Permissioned Blockchain (2) alle Einheiten der Gruppe von Einheiten Zugriff haben, wobei in der Private-Permissioned Blockchain (2) zumindest eine Transaktionsregel und eine Zertifizierungsregel gespeichert ist, wobei die Zertifizierungsregel zur Verarbeitung einer Zertifizierungsanfrage einer Transaktion (8) konfiguriert ist,
- Zuteilen einer Berechtigung an die erste Einheit (5), wobei die Berechtigung den Zugriff auf die Private-Permissioned Blockchain (2) regelt,
- Übersenden von zumindest einer Transaktion der ersten Einheit (5) mit einer Zertifizierungsanfrage für die Transaktion (8) an das Computersystem (1),
- Empfangen der zumindest einen Transaktion der ersten Einheit (5) mittels des Computersystems (1),
- Durchführung einer Prüfung der Zertifizierungsanfrage mittels der Zertifizierungsregel der in der Private-Permissioned Blockchain (2) gesicherten Transaktionsregel und speichern eines Transaktionsartefakts in der Side-Chain (4),
wobei im Falle einer erfolgreichen Prüfung:
- Weiterleitung der Zertifizierungsanfrage an eine Zertifizierungsinstanz (9),
- Ausstellen des Zertifizierungsnachweis (11) durch die Zertifizierungsinstanz (9), wobei der Zertifizierungsnachweis (11) ein digitales Zertifikat umfasst,
- Bereitstellen des Zertifizierungsnachweises (10) der ersten Einheit (5),
wobei im Falle einer nicht erfolgreichen Prüfung:
- Weiterleitung der Zertifizierungsanfrage an die Zertifizierungsinstanz (9) wobei kein Zertifizierungsnachweis (11) ausgestellt wird oder bei einem bereits vorhandenen Zertifizierungsnachweis (11) der ersten Einheit (5) ein Widerruf des Zertifizierungsnachweises (11) der ersten Einheit (5) durch die Zertifizierungsinstanz (9) ausgestellt wird.

2. Computerimplementiertes Verfahren nach Anspruch 1 **dadurch gekennzeichnet, dass** das Verfahren die weiteren folgenden Schritte umfasst:
- Zuteilung eines Zertifizierungstoken (12) an eine zweite Einheit (6) außerhalb der Gruppe von Einheiten, wobei der Zertifizierungstoken (12) die zweite Einheit (6) dazu berechtigt nach einer festgelegten Abstufung Transaktionen auf der Private-Permissioned Blockchain (2) einzusehen, wobei die Zuteilung durch die erste Einheit (5) erfolgt.

3. Computerimplementiertes Verfahren nach einem der vorherigen Ansprüche, **dadurch gekennzeichnet, dass** der Schritt des Ausstellens des Zertifizierungsnachweises (11) der ersten Einheit (5) durch die Zertifizierungsinstanz (9) den folgenden zusätzlichen Schritt umfasst:
- Bereitstellen einer Zertifikatsstatusinformation (23) über den Zertifizierungsnachweis (11) der ersten Einheit (5).

4. Computerimplementiertes Verfahren nach einem der vorherigen Ansprüche, **dadurch gekennzeichnet, dass** im Falle einer nicht erfolgreichen Prüfung: das Verfahren den folgenden zusätzlichen Schritt umfasst:
- Bereitstellen einer Zertifikatswiderrufsinformation über den Zertifizierungsnachweis (11) der ersten Einheit (5).

5. Computerimplementiertes Verfahren nach einem der vorherigen Ansprüche, **dadurch gekennzeichnet, dass** der Zertifizierungsnachweis (11) durch die Zertifizierungsinstanz (9) mittels eines Smart Contracts ausgestellt wird.

6. Computerimplementiertes Verfahren nach einem der vorherigen Ansprüche, **dadurch gekennzeichnet, dass** die Durchführung der Prüfung der Zertifizierungsanfrage und das Ausstellen des Zertifizierungsnachweises in Echtzeit erfolgt.

7. Computerimplementiertes Verfahren nach einem der vorherigen Ansprüche, **dadurch gekennzeichnet, dass** die Verarbeitung der Transaktionen sowie das Erstellen der Transaktionsregeln mittels eines Webcrawlers und/oder Künstlicher Intelligenz und/oder linguistischer Datenverarbeitung erfolgt.

8. Computerimplementiertes Verfahren nach einem der vorherigen Ansprüche, **dadurch gekennzeichnet, dass** die Schritte des Übersendens (10) von zumindest einer Transaktion der ersten Einheit (5) mit einer Zertifizierungsanfrage für die Transaktion an das Computersystem (1) und des Empfangens der zumindest einen Transaktion der ersten Einheit (5) mittels des Computersystems (1) die folgenden Schritte umfassen:
- Bereitstellen eines cloudbasierten Kommunikationsnetzwerks (15) für den Austausch von Transaktionen zwischen der ersten Einheit (5), einer dritten Einheit (7) und eines Evaluationssystems (16), wobei das Evaluationssystem (16) zum automatisierten Auswerten von Transaktion eingerichtet ist, wobei das cloudbasierte Kommunikationsnetzwerk (15) mit der Private-Permissioned Blockchain (2) verbunden ist,
- Empfangen der zumindest einen Transaktion der ersten Einheit mittels des cloudbasierten Kommunikationsnetzwerks (15),
- Prüfen einer ersten individuellen Transaktion der Transaktion der ersten Einheit (5) und Erzeugen einer Empfehlungstransaktion (18) mittels des Evaluationssystem (16), wobei das Erzeugen der Empfehlungstransaktion (18) in dem Evaluationssystem (19) mittels einer Künstliche Intelligenz erfolgt,
- Erzeugen einer zweiten individuellen Transaktion (20) durch die dritte Einheit (7) auf Basis der Transaktion der ersten Einheit (5),
- Ausführen einer Aktualisierung (21) der auf der Private-Permissioned Blockchain (21) gespeicherten Transaktionen, wobei die Aktualisierung der Transaktionen (21) bei einer Änderung der Transaktion der ersten Einheit (5), bei einer Änderung der Empfehlungstransaktion (18) des Evaluationssystem (16), und/oder bei einer Änderung der individuellen Transaktionen (20) der dritten Einheit (7) ausgeführt wird, wobei die Aktualisierung (20) der gespeicherten Transaktionen durch Anlegen einer Transaktion auf der Main-Chain (3) der Private-Permissioned Blockchain (2) erfolgt, wobei die angelegte Transaktion die Änderung umfasst.

9. Computerimplementiertes Verfahren nach einem der vorherigen Ansprüche, **dadurch gekennzeichnet, dass** das Verfahren die folgenden zusätzlichen Schritte umfasst:
- Anfragen eines Zertifikatsstatus (13) der ersten Einheit (5) durch die zweite Einheit (6),
- Genehmigung der Anfrage eines Zertifikatsstatus (13) der ersten Einheit (5) durch die erste Einheit (5),
- Bestätigung einer Einsichtnahme des in der Side-Chain (4) gespeicherten Transaktionsartefakts durch die zweite Einheit (6),
- Bestätigung der korrekten Durchführung der Transaktion zur Zertifikatserhaltung durch die zweiten Einheit (6),
- Erhöhung eines Trust-Levels des Zertifizierungstokens (12) um den Wert von jeweils 1, wobei die Erhöhung mittels eines Smart Contracts getriggert wird.

10. Computerimplementiertes Verfahren nach Anspruch 9, **dadurch gekennzeichnet, dass** die Anfrage des Zertifikatsstatus (13) der ersten Einheit (5) durch die zweite Einheit (6) über das cloudbasierte Kommunikationsnetzwerk (15) erfolgt.

11. Computersystem zum gesicherten Verarbeiten einer Zertifizierungsanfrage einer einen Zertifizierungsnachweis (11) anfragenden ersten Einheit (5), umfassend Mittel zum Ausführung des Verfahrens nach Anspruch 1.

12. Computersystem nach Anspruch 11, **dadurch gekennzeichnet, dass** das System ein cloudbasiertes Kommunikationsnetzwerk (15) umfasst, wobei das cloudbasierte Kommunikationsnetzwerk (15) zumindest für den Austausch von Transaktionen zwischen der ersten Einheit (5), einer dritten Einheit (7) und eines Evaluationssystems (16) eingerichtet ist.

13. Computersystem nach Anspruch 12, **dadurch gekennzeichnet, dass** das Evaluationssystem (16) derart eingerichtet ist, eine Empfehlungstransaktion (18) einer ersten individuellen Transaktion der Transaktion der ersten Einheit (5) zu erzeugen, wobei das Erzeugen der Empfehlungstransaktion (18) in dem Evaluationssystem (16) mittels einer Künstliche Intelligenz erfolgt.
